# EUROPEAN PATENT SPECIFICATION

(11) **EP 0 458 252 B1**
(45) Date of publication and mention of the grant of the patent: **15.11.1995**
(21) Application number: 91108158.6
(22) Date of filing: 21.05.1991
(51) Int. Cl.: H04J 14/02, F41G 7/32

(54) **Long range bidirectional optical fiber communication link**
Bidirektionelle optische Faserübertragungsstrecke grosser Reichweite
Lieu de communication à grande distance par fibre optique bidirective

(30) Priority: 21.05.1990 US 526427; 22.05.1990 US 527228
(43) Date of publication of application: 27.11.1991
(73) Proprietor: Hughes Aircraft Company, Los Angeles, California 90045-0066 (US)
(72) Inventor: Hsu, Hui-Pin, Northridge, California 91325 (US)
(74) Representative: Witte, Alexander, Dr.-Ing.

(56) References cited:
- EP-A- 0 053 236
- US-A- 4 860 968
- OPTISCHE NACHRICHTENTECHNIK, 1981, SPRINGER VERLAG, Berlin-Heidelberg-New York,GERHARD GRAU "Optische Nach- richtentechnik" pages 21-24

## Description

This invention relates to fiber-optic communication systems. More specifically, this invention relates to bidirectional signal transmission within such communication systems.

In certain remote-guidance systems communication with a guided vehicle is facilitated by an optical fiber linking the vehicle with a control station. The optical fiber is typically wound around a bobbin or secured by other means capable of dispensing the fiber as the vehicle travels downrange. An optical carrier of a first wavelength is used to transport commands from the control station to the vehicle, while digital data from the vehicle is impressed upon an optical carrier of a second wavelength and carried by the fiber to the control station. The rate at which data is transmitted from the vehicle to the control station (downlink data rate) is typically much larger than the converse rate (uplink data rate). In order to facilitate a high downlink data rate the bandwidth of the downlink channel typically spans a much wider frequency spectrum than does that of the uplink channel.

The relatively wide downlink bandwidth in conventional remote-guidance systems necessitates a wide bandwidth receiver within the control station. Unfortunately, the sensitivity of a receiver is inherently reduced upon an increase in signal bandwidth since the noise bandwidth thereof is proportionately enlarged. It follows that the sensitivity of the wideband receiver in the control station constitutes one limitation on the transmission range of conventional remote-guidance systems.

The wavelength of optical energy utilized in signal transmission along the link also affects transmission range. In particular, the loss suffered by light energy propagating within an optical fiber generally decreases as wavelength increases. As conventional fiber-optic communication links within vehicle guidance systems typically include carriers at 850 and 1300 nm. (nanometers) or alternatively at 850 nm. and 1060 nm., optical loss at 850 nm. may be dispositive as to transmission range. In fact, fiber-induced loss at 850 nm. has constrained the transmission range of conventional fiber-optic communication links to approximately 10 Km. Designers of conventional vehicle guidance systems have been precluded from utilizing designs which involve an increase in the wavelength of the shorter wavelength carrier (850 nm.) out of concern for the need to maintain adequate isolation between the uplink and downlink channels.

Document US-A-4 860 968 discloses a biderectional communication link employing fiber optic cables wound on bobbins and connecting a control station and a vehicle. At the vehicle and at the control station each a bobbin are provided, the fiber optic cable being connected at the site of each bobbin with an electro-optical encoder/decoder for receiving/transmitting data via the fiber optic cable. Thus, this document discloses in principle the remote-guidance system discussed in detail at the outset.

Further, document EP-A-0 053 236 discloses a service-integrated transmission system for transmitting digital signals over a fiber optic transmission path. The digital signals have a transmission band whose upper limit frequency corresponds to the maximum bit range of the signals. The transmission is effected by simultaneously transmitting, over the transmission path, digital signals having a high bit rate only in an upper part of the transmission band and digital signals having a low bit rate only in a lower part of the transmission band.

The known system includes a transmitter at one end of the path which separately multiplexes low bit rate signals into a narrow band signal and high bit rate signals into a broad band signal, combines the multiplexed signals, and modulates a light source with the combined signal. A receiver at the upper end of the path converts the modulated light signal into a demodulated electrical signal, separates the two multiplexed signals, and then demultiplexes each of the latter signals.

In view of this it is an object of the captioned application to provide a bidirectional communication link comprising an optical fiber, wherein transmission range is not limited by the fiber-induced loss at relatively short optical wavelength.

According to the invention, this object is achieved with a long range bidirectional communication link comprising an optical fiber having a first and a second end, wherein the attenuation of optical energy passing through said optical fiber at wavelength included within a transmission window is substantially minimized and comprising:
- first means for launching a first optical carrier of a first wavelength onto said fiber at said first end thereof, said first launching means including means for impressing a first modulating signal spanning a first frequency spectrum upon said first carrier;
- second means for launching a second optical carrier of a second wavelength included within said transmission window onto said fiber at said second end thereof, said second launching means including means for impressing upon said second carrier a second modulating signal spanning a second frequency spectrum preferably larger than said first spectrum;
- a first receiver of a first bandwidth encompassing said first frequency spectrum, coupled to said second end of said fiber, for extracting said first modulating signal from said first optical carrier; and
- a second receiver having a second bandwidth encompassing said second frequency spectrum, coupled to said first end of said fiber, for extracting said second modulating signal from said second optical carrier.

Further, according to the invention a method for maximizing the transmission range of a bidirectional communication link, which includes an optical fiber having a first and a second end, is provided, wherein the attenuation of optical energy passing through said optical fiber at wavelength included within a transmission window is substantially minimized, and comprising the steps of:
a) launching a first optical carrier of a first wavelength onto said optical fiber at said first end thereof;
b) impressing a first modulating signal spanning a first frequency spectrum upon said first carrier;
c) launching a second optical carrier of a second wavelength within said transmission window onto said fiber at a second end thereof;
d) impressing upon said second carrier a second modulating signal spanning a second frequency spectrum preferably larger than said first spectrum;
e) coupling a first receiver of a first bandwidth encompassing said first frequency spectrum to said second end of said fiber, said first receiver being disposed to extract said first modulating signal from said first optical carrier; and
f) coupling a second receiver having a second bandwidth encompassing said second frequency spectrum to said first end of said fiber, said second receiver being disposed to extract said second modulating signal from said second optical carrier.

The need in the art for an optical fiber link which overcomes the constraints on signal transmission range due to fiber-induced loss at short optical wavelengths is addressed by the long-range optical fiber communication link of the present invention. A first embodiment of the communication link of the present invention includes an optical fiber having a first and a second end wherein the attenuation of optical energy passing therethrough at wavelengths included within a transmission window is substantially minimized. The inventive link further includes a first arrangement for launching a first optical carrier of a first wavelength onto the first end of the fiber. Provision is made within the launching arrangement for impressing upon the first carrier a first modulating signal spanning a first frequency spectrum. The first embodiment also includes a second arrangement for launching a second optical carrier of a second wavelength onto the second end of the fiber, wherein the second wavelength is included within the transmission window. The second launching arrangement is further disposed to impress upon the second carrier a second modulating signal spanning a second frequency spectrum larger than the first spectrum. A first receiver of a first bandwidth encompassing the first frequency spectrum is coupled to the second end of the fiber. The first receiver is operative to extract the first modulating signal from the first optical carrier. Similarly, a second receiver having a second bandwidth encompassing the second frequency spectrum is coupled to the first end of the fiber. The second receiver is disposed to extract the second modulating signal from the second optical carrier.

Fig. 1 is a block diagrammatic representation of a first embodiment of the long-range optical fiber communication link of the present invention.

Fig. 2 is a block diagrammatic representation of an alternative embodiment of the long-range optical fiber communication link of the present invention.

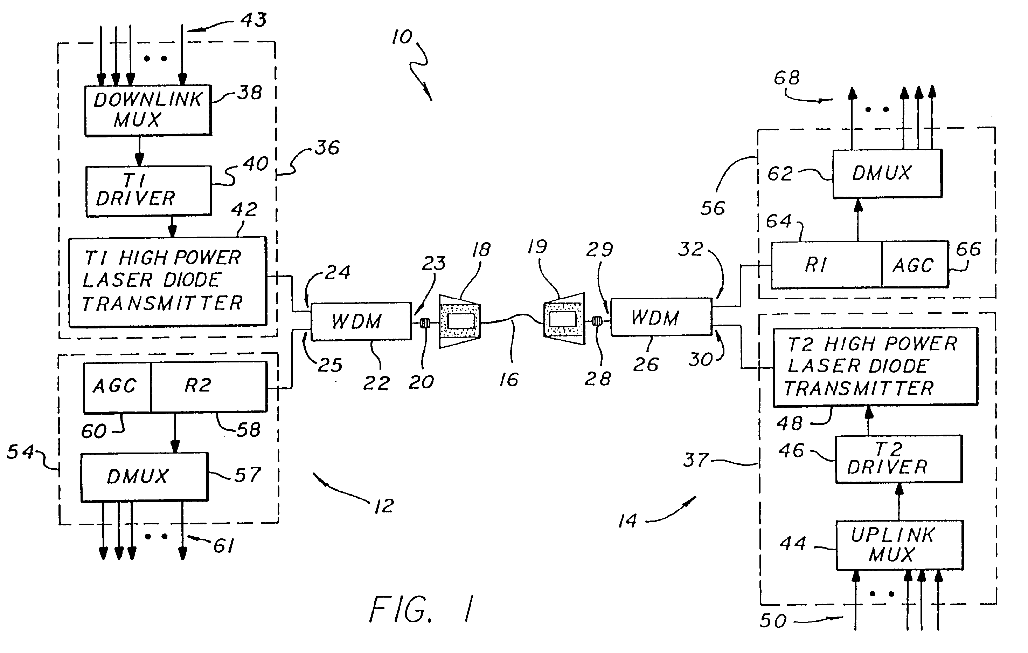

A first embodiment of the long-range optical fiber communication link 10 of the present invention is shown in the block diagrammatic representation of Fig. 1. The communication link 10 facilitates communication between a vehicle subsystem 12 and control station subsystem 14 through an optical fiber 16 therebetween. In the first preferred embodiment of Fig. 1 the fiber 16 conducts signals impressed on an optical carrier of wavelength W1 from the vehicle 12 to the control station 14 and guides signals impressed on an optical carrier of wavelength W2 from the control station 14 to the vehicle 12. The fiber 16 is a conventional commercially available single mode optical fiber.

As mentioned in the Background of the Invention, fiber-induced attenuation of light energy passing through optical fibers typically decreases as optical wavelength increases. However, there exists a "transmission window" in certain conventional optical fibers wherein the attenuation of optical energy of wavelengths extending from approximately 1500 to 1570 nm. is substantially minimized. As will be described more fully below, the transmission range of the inventive optical fiber communication link 10 is enhanced by selecting one or both of the optical carrier wavelengths W1 and W2 to be within this transmission window.

As shown in Fig. 1, a bobbin 18 is connected to the fiber-optic cable 16 at one end thereof and attached to the vehicle subsystem 12 by a first optical fiber connector 20. The fiber-optic cable 16 is initially wound around the first and a second bobbin 18 and 19 and is dispensed therefrom as the vehicle 12 moves away from the control station 14. The connector 20 allows passage of light energy between the bobbin 18 and a dichroic wavelength division multiplexer/coupler 22. The multiplexer 22 has first, second and third ports 23, 24, and 25 and is disposed to direct optical energy of wavelength W2 entering the first port 23 to the third port 25. Similarly, the multiplexer 22 is configured to route optical energy at wavelength W1 entering the second port 24 to the first port 23. The coupler 22 is commercially available from vendors such as Gould Inc., Fiber Optics Division of Glen Burnie, Maryland.

The fiber-optic cable 16 is operatively coupled to a control station multiplexer 26 through the bobbin 19 and a second optical fiber connector 28. The multiplexer 26 is substantially identical to the multiplexer 22 and has first, second and third ports 29, 30, and 32. Again, optical energy of wavelength W1 entering the first port 29 is directed to the third port 32. The multiplexer 26 is further disposed to guide optical energy of wavelength W2 entering the second port 30 to the first port 29.

Disposed within the vehicle subsystem 12 and control station 14 are first and second transmit sections 36 and 37, respectively. The first transmit section 36 includes a downlink multiplexer 38, a transmitter driver 40 and a laser diode transmitter 42. The multiplexer 38 accepts input from a multiple channel data bus 43 and outputs a multiplexed electrical signal to the driver 40. The driver 40 includes circuitry for generating a digital downlink waveform in response to the data stream from the multiplexer 38. For example, it may be desired to translate a relatively large 200 Mb/s data rate from the multiplexer 38 into an encoded baseband digital waveform having a frequency of 200 MHz. In this instance the digital downlink waveform would be synthesized by the driver 40 by a 200 MHz analog current modulation signal. The digital current waveform from the driver 40 is used to modulate an optical carrier centered at the wavelength W1 produced by a laser diode or light emitting diode within the laser diode transmitter 42. This modulated optical carrier is then launched onto the optical fiber 16 via the multiplexer 22. In this manner a relatively wideband downlink signal spanning the first frequency spectrum is transmitted from the vehicle subsystem 12 to the control station subsystem 14 by modulating an optical carrier about the wavelength W1.

Similarly, the second transmit section 37 includes a control station uplink multiplexer 44, a control station transmitter driver 46 and a control station laser diode transmitter 48. Again, the multiplexer 44 accepts input from a multiple channel data bus 50 and outputs a multiplexed electrical signal to the driver 46. The driver 46 includes circuitry for generating a digital uplink waveform in response to the data stream from the multiplexer 44. For example, it may be desired to translate a 2 Mb/s data rate from the multiplexer 44 into an encoded digital waveform. In this instance the driver 46 would synthesize the digital waveform using a 2 MHz current modulation signal or by frequency modulating a subcarrier signal across a second frequency spectrum above the downlink baseband. The digital uplink waveform from the driver 46 is used to modulate the optical carrier centered at the wavelength W2 produced by a laser diode or light emitting diode within the laser diode transmitter 48. This modulated optical carrier is then launched onto the optical fiber 16 via the multiplexer 26.

Disposed within the vehicle subsystem 12 and the control station subsystem 14 are vehicle and control station receive sections 54 and 56, respectively. The vehicle receive section 54 includes a demultiplexer 57 and receiver 58 with associated AGC circuitry 60. As shown in Fig. 1, the optical carrier modulated by the uplink waveform is relayed from the optical fiber 16 to the receiver 58 through the multiplexer 22. The receiver 58 includes a photodetector which generates an electrical signal in response to the incident optical waveform. The AGC circuitry 60 then compensates for fluctuations in the power of this electrical signal. Next, the electrical signal is separated into its constituent components by the demultiplexer 57 - which then directs each constituent signal to the appropriate channel of a data bus 61.

The control station receive section 56 within the control station 14 is similarly configured. Specifically, the control station receive section 56 includes a second demultiplexer 62 and a second receiver 64 with associated AGC circuitry 66. As shown in Fig. 1, the optical carrier modulated by the downlink waveform is relayed from the optical fiber 16 to the receiver 64 by the bobbin 19 and multiplexer 26. The receiver 64 includes a photodetector which generates an electrical signal in response to the incident optical waveform. The AGC circuitry 66 then compensates for fluctuations in the power of this electrical signal. Again, the electrical signal generated by the receiver 64 is separated into its constituent components by the demultiplexer 62 - which then directs each constituent signal to the appropriate channel of a data bus 68.

In the first preferred embodiment of Fig. 1, the high data rate of the downlink multiplexer 38 relative to that of the uplink multiplexer 44 requires that the minimum spectral bandwidth of the downlink signal be proportionately larger than that of the uplink signal. It follows that the bandwidth of the receiver 64 is generally designed to be larger than that of the receiver 58. As mentioned in the Background of the Invention, the noise and signal bandwidths of a receiver are proportional; hence, wideband receivers are typically less sensitive than those having narrow bandwidths. Thus, in conventional optical fiber links wherein transmission range is limited by fiber-induced signal loss (as opposed to dispersion), the sensitivity of the wideband receiver determines the maximum length - typically 20 km - of conventional fiber links.

In accordance with the present teachings, this limitation is substantially overcome by utilizing a downlink carrier wavelength W1 within the transmission window of 1500 to 1570 nm. Optical energy transmitted at wavelengths within this window suffers the minimum fiber-induced loss and thus the range-limiting effect of the inherently low sensitivity wideband receiver 64 is substantially negated. Specifically, for a downlink carrier W1 within the transmission window and an uplink carrier W2 of 1300 nm., the transmission range of the communication link 10 of the present invention may be extended to on the order of 160 km.

The transmission range of the illustrative embodiment of Fig. 1 may be further improved by including both the first W1 and the second W2 optical carrier wavelengths within the transmission window. The requisite uplink and downlink channel isolation is achieved by substituting high isolation multiplexers 22′ and 26′ (not shown) for the multiplexers 22 and 26. In particular, the multiplexers 22′ and 26′ each include at least a pair of serially connected wavelength-selecting fusion type optical couplers. The serial concatenation of the individual fusion type couplers (available from, for example, Gould Inc., Fiber Optics Division of Glen Burnie, Maryland) enables greater inter-channel isolation than has generally been demonstrated by conventional bidirectional fiber optic links. Uplink and downlink channel parasitic coupling is further suppressed by selecting the optical carrier wavelengths W1 and W2 to be at the boundaries of the transmission window (1500 and 1570 nm.).

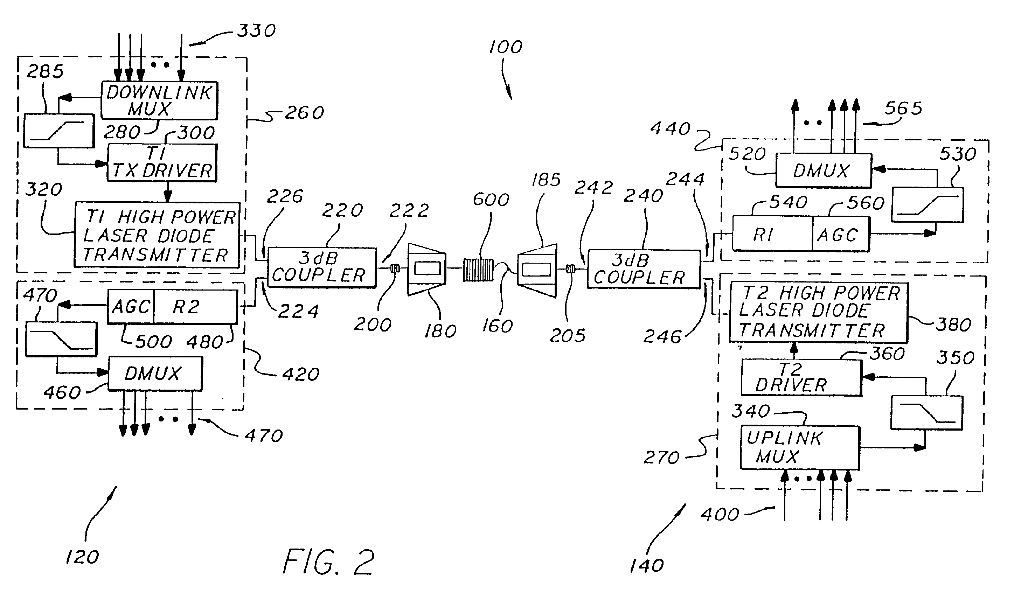

An alternative embodiment of the long range bidirectional optical fiber communication link 100 of the present invention is shown in the block diagrammatic representation of Fig. 2. The link 100 facilitates communication between a vehicle subsystem 120 and control station subsystem 140 via an optical fiber 160. The fiber 160 conducts an optical carrier in each direction, with each carrier centered at a common wavelength W within the transmission window (typically 1500 to 1570 nm.) of the fiber 160. As will be discussed more fully below, signals sent from the vehicle 120 to the control station 140 occupy a first frequency spectrum and those sent in the opposing direction are confined to a nonoverlapping second frequency spectrum. The signals propagate along the fiber 160 via oppositely traveling optical carriers each modulated about the wavelength W.

As shown in Fig. 2, first and second bobbins 180 and 185 are connected to the fiber-optic cable 160 at each end thereof and are attached to the vehicle subsystem 120 and control station subsystem 140 by first and second optical fiber connectors 200 and 205. The fiber-optic cable 160 is initially wound around the bobbins 180 and 185 and is dispensed therefrom as the vehicle 120 moves away from the control station 140. The connectors 200 and 205 allow passage of light energy between the bobbins 180 and 185 and first and second 3 db optical fiber couplers 220 and 240. The first fiber coupler 220 has first, second and third ports 222, 224, and 226 and is disposed to split optical power entering the first port 222 between the second and third ports 224 and 226. The directivity (attenuation of optical energy between the second and third ports 224, 226) of commercially available fiber optic couplers such as the coupler 220 is approximately 60 to 70 db. The second coupler 240 is substantially identical to the coupler 220 and has first, second and third ports 242, 244, and 246. Again, optical power entering the first port 242 is split between the second and third ports 244 and 246.

Disposed within the vehicle subsystem 120 and control station 140 are first and second transmit sections 260 and 270, respectively. The first transmit section 260 includes a downlink multiplexer 280, a first pulse shaping circuit 285, a transmitter driver/modulator 300 and a laser diode transmitter 320. The multiplexer 280 accepts input from a multiple channel data bus 330 and outputs a multiplexed electrical signal to the pulse shaping circuit 285. The pulse shaping circuit 285 has a passband spanning a predetermined spectral range and thus limits the bandwidth of the electrical signal relayed to the modulator 300. The modulator 300 includes circuitry for generating a digital waveform of a known frequency in response to the conditioned electrical signal from the pulse shaping circuit 285. For example, it may again be desired to translate a 200 Mb/s data rate from the multiplexer 280 into a digital waveform having a frequency of 200 Mhz. The digital waveform from the modulator 300 is used to modulate the wavelength of an optical carrier centered at the wavelength W and produced by a laser diode or light emitting diode within the laser diode transmitter 320. This modulated optical carrier is then launched onto the optical fiber 160 via the 3 dB coupler 220. In this manner a digital downlink signal D confined to a first frequency spectrum is transmitted from the vehicle subsystem 120 to the control station subsystem 140 by modulating an optical carrier about the wavelength W included within the transmission window of the fiber 160.

Similarly, the second transmit section 270 includes a control station uplink multiplexer 340, a second pulse shaping circuit 350, a control station transmitter driver/modulator 360 and a control station laser diode transmitter 380. Again, the multiplexer 340 accepts input from a multiple channel data bus 400 and outputs a multiplexed electrical signal to the pulse shaping circuit 350. The pulse shaping circuit 350 has a passband spanning a predetermined spectral range and thus limits the bandwidth of the multiplexed digital signal relayed to the modulator 360. The modulator 360 includes circuitry for generating a digital waveform of a known frequency in response to the conditioned electrical signal from the pulse shaping circuit 350. For example, it may again be desired to translate a 2 Mb/s data rate from the multiplexer 340 into a band-limited digital waveform. Alternatively, the data stream from the multiplexer 340 may be impressed on a subcarrier (GHz range) which is spectrally segregated from the downlink data. The waveform from the modulator 360 is used to modulate the wavelength of an optical carrier centered at the wavelength W produced by a laser diode or light emitting diode within the laser diode transmitter 380. This modulated optical carrier is then launched onto the optical fiber 160 via the 3 dB coupler 240. In this manner a digital uplink signal U having a spectral power density profile segregated from that of the downlink signal is transmitted from the control station subsystem 140 to the vehicle subsystem 120 by modulating an optical carrier about the wavelength W. Alternatively, an analog signal confined to a second frequency spectrum substantially distinct from the first frequency spectrum may be utilized in lieu of the digital uplink signal.

Disposed within the vehicle subsystem 120 and the control station subsystem 140 are first and second receive sections 420 and 440, respectively. The first receive section 420 includes a demodulator/demultiplexer 460, a band pass filter 470 and a receiver 480 with associated AGC circuitry 500. As shown in Fig. 2, the optical waveform carrying the uplink signal U is relayed from the optical fiber 160 to the receiver 480 through the coupler 220. The receiver 480 includes a photodetector which generates an electrical signal in response to the incident optical waveform. The AGC circuitry 500 then compensates for fluctuations in the power of this electrical signal. The electrical signal from the photodetector is next routed to the band pass filter 470. The filter 470 has a passband encompassing the second frequency spectrum and a stopband including the first frequency spectrum. The receiver 480 and filter 470 are thus operative to recover the uplink signal U from an optical carrier and to suppress signals, including the downlink signal D, having spectral components outside of the second frequency spectrum. The uplink signal is then relayed by the filter 470 to the demultiplexer 460. The demultiplexer 460 separates the uplink signal into individual components which are then launched onto a data bus 465.

The second receive section 440 within the control station 140 is similarly configured. Specifically, the second receive section 440 includes a control station demodulator/ demultiplexer 520, a second band pass filter 530 and a control station receiver 540 with associated AGC circuitry 560. As shown in Fig. 2, the optical waveform carrying the downlink signal D is relayed from the optical fiber 160 to the receiver 540 through the coupler 240. Again, the receiver 540 includes a photodetector which generates an electrical signal in response to the incident optical waveform. The AGC circuitry 560 compensates for fluctuations in the power of this electrical signal. The electrical signal from the photodetector is next routed to the bandpass filter 530. The filter 530 has a passband encompassing the first frequency spectrum and a stopband including the second frequency spectrum. The receiver 540 and filter 530 are thus operative to recover the downlink signal D from an optical carrier and to suppress signals, including the uplink signal, having spectral components outside of the first frequency spectrum. The downlink signal D is then relayed by the filter 530 to the demultiplexer 520. The demultiplexer 520 separates the downlink signal D into individual components which are then launched onto a data bus 565.

The transmission range of the link 100 may be further extended by inserting a semiconductor optical amplifier 600 in series with the optical fiber 160. Since only optical carriers centered at a common wavelength W propagate through the fiber 160, these carriers may be directly amplified by tuning the amplifier 600 to the wavelength W. In contrast, dual wavelength fiber-optic communication links typically require complex optical repeater circuits to effect intermediate amplification along the fiber.

The present invention is not limited to the context of a remote guidance system. The transmission range augmentation techniques of the present invention may be utilized in other fiber optic communication links in which oppositely directed channels have disparate data rates, for example, one such system could be a bidirectional fiber optic system such as a "subscriber" cable television system. In such a system audio/video television data is transmitted in a first direction at a high rate while subscriber commands are carried via the oppositely directed low data rate channel.

Moreover, the invention is not limited to the particular spectrum of wavelengths defining the transmission window disclosed herein. In particular, certain optical fibers may have minimum loss spectra defined by wavelengths other than 1500 and 1570 nm. In addition, optical couplers dividing optical power between the second and third ports thereof asymmetrically may be substituted for the 3 dB optical couplers included in the embodiment of Fig. 2.

## Claims

1. A long range bidirectional communication link, comprising an optical fiber (16; 160) having a first and a second end, characterized by:
- the fact that the attenuation of optical energy passing through said optical fiber (16; 160) at wavelengths (W1, W2; W) included within a transmission window is substantially minimized;
- first means (37; 270) for launching a first optical carrier of a first wavelength (W2; W) onto said fiber (16; 160) at said first end thereof, said first launching means (37; 270) including means (44, 46, 50; 340, 350, 360, 400) for impressing a first modulating signal spanning a first frequency spectrum upon said first carrier;
- second means (36; 260) for launching a second optical carrier of a second wavelength (W1; W) included within said transmission window onto said fiber (16; 160) at said second end thereof, said second launching means (36; 260) including means (38, 40, 43; 280, 285, 300, 330) for impressing upon said second carrier a second modulating signal spanning a second frequency spectrum preferably larger than said first spectrum;
- a first receiver (54; 420) of a first bandwidth encompassing said first frequency spectrum, coupled to said second end of said fiber (16; 160), for extracting said first modulating signal from said first optical carrier; and
- a second receiver (56, 440) having a second bandwidth encompassing said second frequency spectrum, coupled to said first end of said fiber (16; 160), for extracting said second modulating signal from said second optical carrier.

2. The bidirectional communication link of claim 1, characterized in that:
- said first means (37) includes
-- first transmitter means (48) for generating said first optical carrier of said first wavelength (W2), and
-- first modulator means (44, 46, 50) for modulating said first optical carrier with said first modulating signal spanning said first frequency spectrum;
- said second means (36) includes
-- second transmitter means (42) for generating said second optical carrier at said second wavelength (W1) included within said transmission window, and
-- second modulator means (38, 40, 43) for modulating said second optical carrier with said second modulating signal spanning a second frequency spectrum larger than said first frequency spectrum;
- said second bandwidth of said second receiver (56) is larger than said first bandwidth;
- first multiplexing means (26) are provided for linking said first transmitter means (48) and said second receiver means (56) to said first end of said optical fiber (16); and
- second multiplexing means (22) are provided for linking said second transmitter means (42) and said first receiver means (54) to said second end of said optical fiber (16).

3. The bidirectional communication link of claim 1, characterized in that:
- said first wavelength (W2) is within said transmission window, and
- said second wavelength (W1) is not equivalent to said first wavelength (W2).

4. The bidirectional communication link of claim 1, characterized in that:
- said first means (37) includes
-- first transmitter means (48) for generating said first optical carrier of a first wavelength (W2) within said transmission window, and
- first modulator means (44, 46, 50) for modulating said first optical carrier with said first modulating signal spanning said first frequency spectrum;
- said second means (36) includes
-- second transmitter means (42) for generating said second optical carrier at a second wavelength (W1), not equivalent to said first wavelength (W2), within said transmission window, and
-- second modulator means (38, 40, 43) for modulating said second optical carrier with a second modulating signal spanning a second frequency spectrum;
- said second bandwidth of said second receiver (56) is larger than said first bandwidth;
- first high-isolation multiplexing means (26) are provided for linking said first transmitter means (48) and said second receiver means (56) to said first end of said optical fiber (16); and
- second high-isolation multiplexing means (22) are provided for linking said second transmitter means (42) and said first receiver means (54) to said second end of said optical fiber (16).

5. The bidirectional communication link of claim 4, characterized in that said first high-isolation multiplexing means (26) includes first and second serially connected optical multiplexers.

6. The bidirectional communication link of claim 1, characterized in that:
- said second wavelength (W) is equivalent to said first wavelength (W), and
- said second frequency spectrum does not overlap said first spectrum.

7. The bidirectional communication link of claim 6, characterized in that:
- said first means (270) includes
-- first transmitter means (380) for generating said first optical carrier of said first wavelength (W), and
-- first modulator means (340, 350, 360, 400) for modulating said first optical carrier with said first modulating signal confined to said first frequency spectrum;
- said second means (260) includes
-- second transmitter means (320) for generating said second optical carrier of said wavelength (W), and
-- second modulator means (280, 285, 300, 330) for modulating said second optical carrier with said second modulating signal confined to a second frequency spectrum;
- first optical coupler means (240) are provided for coupling said first transmitter means (380) and said second receiver means (540) to said first end of said optical fiber (160); and
- second optical coupler means (220) are provided for coupling said second transmitter means (320) and said first receiver means (480) to said second end of said optical fiber (160).

8. The bidirectional communication link of claim 7, characterized by first and second band pass filters (350, 470) connected to said first and second receivers (480, 540), respectively.

9. The bidirectional communication link of claim 7 or 8, characterized in that said optical fiber (160) includes first and second segments optically coupled by an optical amplifier (600) having a passband which includes said first wavelength (W).

10. The bidirectional communication link of claim 1 or claim 6, used in a system including a missile (12; 120), a control station (14; 140) and said optical fiber (16; 160) therebetween, characterized in that:
- bobbin means (19; 185) are provided for coupling a first end of said optical fiber (16; 160) to said control station (14; 140);
- said first means (37; 270) is included within said control station (14; 140);
- said second means (36; 260) is included within said missile (12; 120);
- said first receiver (54; 420) is included within said missile (12; 120) and coupled to said second end of said fiber (16; 160); and
- said second receiver (56; 440) is included within said control station (14; 140).

11. The bidirectional communication link of any of claims 1 through 10, characterized in that said transmission window extends from approximately 1500 nm to 1570 nm.

12. A method for maximizing the transmission range of a bidirectional communication link (10; 100) which includes an optical fiber (16; 160) having a first end and a second end,
characterized in that the attenuation of optical energy passing through said optical fiber (16; 160) at wavelengths included within a transmission window is substantially minimized, and
characterized by the steps of:
a) launching a first optical carrier of a first wavelength (W2; W) onto said optical fiber (16; 160) at said first end thereof;
b) impressing a first modulating signal spanning a first frequency spectrum upon said first carrier;
c) launching a second optical carrier of a second wavelength (W1; W) within said transmission window onto said fiber (16; 160) at a second end thereof;
d) impressing upon said second carrier a second modulating signal spanning a second frequency spectrum preferably larger than said first spectrum;
e) coupling a first receiver (54, 420) of a first bandwidth encompassing said first frequency spectrum to said second end of said fiber (16; 160), said first receiver (54; 420) being disposed to extract said first modulating signal from said first optical carrier; and
f) coupling a second receiver (56; 440) having a second bandwidth encompassing said second frequency spectrum to said first end of said fiber (16), said second receiver (56, 440) being disposed to extract said second modulating signal from said second optical carrier.

13. The method of claim 12, characterized in that:
- said first wavelength (W) is equivalent to said second wavelength (W), and
- said second frequency spectrum does not overlap said first frequency spectrum.

14. The method of claim 12 or 13, characterized in that said transmission window extends from approximately 1500 to 1570 nm.

## Patentansprüche

1. Bidirektionale Langstrecken-Nachrichtenverbindung mit einer ein erstes und ein zweites Ende aufweisenden optischen Faser (16; 160), gekennzeichnet durch:
- die Tatsache, daß die Dämpfung von optischer Energie, die durch die optische Faser (16; 160) bei Wellenlängen (W1, W2; W) hindurchgeht, die in einem Übertragungsfenster enthalten sind, wesentlich minimiert ist;
- eine erste Vorrichtung (37; 270), um einen ersten optischen Träger von einer ersten Wellenlänge (W2; W) in die Faser (16; 160) an deren erstem Ende einzuspeisen, wobei die Einspeisevorrichtung (37; 270) eine Vorrichtung (44, 46, 50; 340, 350, 360, 400) enthält, um dem ersten Träger ein erstes Modulationssignal einzuprägen, das sich über einem ersten Frequenzspektrum erstreckt;
- eine zweite Vorrichtung (36; 260), um einen zweiten optischen Träger von einer zweiten Wellenlänge (W1; W), die in dem Übertragungsfenster enthalten ist, in die Faser (16; 160) an deren zweitem Ende einzuspeisen, wobei die zweite Einspeisevorrichtung (36; 260) eine Vorrichtung (38, 40, 43; 280, 285, 300, 330) enthält, um dem zweiten Träger ein zweites Modulationssignal einzuprägen, das sich über einem zweiten Frequenzspektrum erstreckt, das vorzugsweise größer ist als das erste Spektrum;
- einen ersten Empfänger (54; 420) von einer ersten Bandbreite, die das erste Frequenzspektrum enthält, wobei der Empfänger an das zweite Ende der Faser (16; 160) gekoppelt ist, um das erste Modulationssignal aus dem ersten optischen Träger herauszuziehen; und
- einen zweiten Empfänger (56, 440) mit einer zweiten Bandbreite, die das zweite Frequenzspektrum enthält, wobei der Empfänger an das erste Ende der Faser (16; 160) gekoppelt ist, um das zweite Modulationssignal aus dem zweiten optischen Träger hauszuziehen.

2. Bidirektionale Nachrichtenverbindung nach Anspruch 1, dadurch gekennzeichnet, daß:
- die erste Vorrichtung (37)
-- eine erste Sendevorrichtung (48) enthält, um den ersten optischen Träger bei der ersten Wellenlänge (W2) zu erzeugen, und
-- eine erste Modulatorvorrichtung (44,46, 50) aufweist, um den ersten optischen Träger mit dem ersten Modulationssignal zu modulieren, das sich über das erste Frequenzspektrum erstreckt;
- die zweite Vorrichtung (36)
-- eine zweite Sendevorrichtung (42) enthält, um den zweiten optischen Träger bei der zweiten Wellenlänge (W1) zu erzeugen, die in dem Übertragungsfenster enthalten ist, und
-- eine zweite Modulatorvorrichtung (38, 40, 43) aufweist, um den zweiten optischen Träger mit dem zweiten Modulationssignal zu modulieren, das sich über einem zweiten Frequenzspektrum erstreckt, das größer ist als das erste Frequenzspektrum;
- die zweite Bandbreite des zweiten Empfängers (56) größer ist als die erste Bandbreite;
- eine erste Multiplexervorrichtung (26) vorgesehen ist, um die erste Sendevorrichtung (48) und die zweite Empfangsvorrichtung (56) mit dem ersten Ende der optischen Faser (16) zu verbinden; und
- eine zweite Multiplexervorrichtung (22) vorgesehen ist, um die zweite Sendevorrichtung (42) und die erste Empfangsvorrichtung (54) mit dem zweiten Ende der optischen Faser (16) zu verbinden.

3. Bidirektionale Nachrichtenverbindung nach Anspruch 1, dadurch gekennzeichnet, daß:
- die erste Wellenlänge (W2) sich in dem Übertragungsfenster befindet, und
- die zweite Wellenlänge (W1) nicht äquivalent zu der ersten Wellenlänge (W2) ist.

4. Bidirektionale Nachrichtenverbindung nach Anspruch 1, dadurch gekennzeichnet, daß:
- die erste Vorrichtung (37)
-- eine erste Sendevorrichtung (48) umfaßt, um den ersten optischen Träger von einer ersten Wellenlänge (W2) in dem Übertragungsfenster zu erzeugen, und
- eine erste Modulatorvorrichtung (44, 46, 50) aufweist, um den ersten optischen Träger mit dem ersten Modulationssignal zu modulieren, das sich über dem ersten Frequenzspektrum erstreckt;
- die zweite Vorrichtung (36)
-- eine zweite Sendevorrichtung (42) umfaßt, um den zweiten optischen Träger bei einer zweiten Wellenlänge (W1) zu erzeugen, die nicht äquivalent zu der ersten Wellenlänge (W2) aber innerhalb des Übertragungsfensters ist, und
-- eine zweite Modulatorvorrichtung (38, 40, 43) umfaßt, um den zweiten optischen Träger mit einem zweiten Modulationssignal zu modulieren, das sich über einem zweiten Frequenzspektrum erstreckt;
- die zweite Bandbreite des zweiten Empfängers (56) größer ist als die erste Bandbreite;
- eine erste Multiplexervorrichtung (26) mit hoher Isolation vorgesehen ist, um die erste Sendevorrichtung (48) und die zweite Empfangsvorrichtung (56) mit dem ersten Ende der optischen Faser (16) zu verbinden; und
- eine zweite Multiplexervorrichtung (22) mit hoher Isolation vorgesehen ist, um die zweite Sendevorrichtung (42) und die erste Empfangsvorrichtung (54) mit dem zweiten Ende der optischen Faser (16) zu verbinden.

5. Bidirektionale Nachrichtenverbindung nach Anspruch 4, dadurch gekennzeichnet, daß die erste Multiplexervorrichtung (26) hoher Isolation einen ersten und einen zweiten seriell verbundenen optischen Multiplexer beinhaltet.

6. Bidirektionale Nachrichtenverbindung nach Anspruch 1, dadurch gekennzeichnet, daß:
- die zweite Wellenlänge (W) äquivalent zu der ersten Wellenlänge (W) ist, und
- das zweite Frequenzspektrum das erste Spektrum nicht überlappt.

7. Bidirektionale Nachrichtenverbindung nach Anspruch 6, dadurch gekennzeichnet, daß:
- die erste Vorrichtung (270)
-- eine erste Sendevorrichtung (380) umfaßt, um den ersten optischen Träger bei der ersten Wellenlänge (W) zu erzeugen, und
-- eine erste Modulatorvorrichtung (340, 350, 360, 400) aufweist, um den ersten optischen Träger mit dem ersten Modulationssignal zu modulieren, das auf das erste Frequenzspektrum begrenzt ist;
- die zweite Vorrichtung (260)
-- eine zweite Sendevorrichtung (320) umfaßt, um den zweiten optischen Träger bei der Wellenlänge (W) zu erzeugen, und
-- eine zweite Modulatorvorrichtung (280, 285, 300, 330) aufweist, um den zweiten optischen Träger mit dem zweiten Modulationssignal zu modulieren, das auf ein zweites Frequenzspektrum begrenzt ist;
- eine erste optische Koppelvorrichtung (240) vorgesehen ist, um die erste Sendevorrichtung (380) und die zweite Empfangsvorrichtung (540) an das erste Ende der optischen Faser (160) zu koppeln; und
- eine zweite optische Koppelvorrichtung (220) vorgesehen ist, um die zweite Sendevorrichtung (320) und die erste Empfangsvorrichtung (480) an das zweite Ende der optischen Faser (160) zu koppeln.

8. Bidirektionale Nachrichtenverbindung nach Anspruch 7, gekennzeichnet durch erste und zweite Bandpaßfilter (350, 470), die mit dem ersten bzw. dem zweiten Empfänger (480, 540) verbunden sind.

9. Bidirektionale Nachrichtenverbindung nach Anspruch 7 oder 8, dadurch gekennzeichnet, daß die optische Faser (160) ein erstes und ein zweites Segment umfaßt, die optisch durch einen optischen Verstärker (600) gekoppelt sind, der ein Durchlaßband aufweist, das die erste Wellenlänge (W) beinhaltet.

10. Bidirektionale Nachrichtenverbindung nach Anspruch 1 oder 6, die in einem System mit einem Projektil (12; 120), einer Kontrollstation (14; 140) sowie der optischen Faser (16; 160) zwischen diesen verwendet wird, dadurch gekennzeichnet, daß:
- eine Spulenvorrichtung (19; 185) vorgesehen ist, um ein erstes Ende der optischen Faser (16; 160) an die Kontrollstation (14; 140) zu koppeln;
- die erste Vorrichtung (37; 270) in der Kontrollstation (14; 140) enthalten ist;
- die zweite Vorrichtung (36; 260) in dem Projektil (12; 120) enthalten ist;
- der erste Empfänger (54; 420) in dem Projektil (12; 120) enthalten und an das zweite Ende der Faser (16; 160) gekoppelt ist; und
- der zweite Empfänger (56; 440) in der Kontrollstation (14; 140) enthalten ist.

11. Bidirektionale Nachrichtenverbindung nach einem der Ansprüche 1 bis 10, dadurch gekennzeichnet, daß sich das Übertragungsfenster von ungefähr 1500 nm bis zu 1570 nm erstreckt.

12. Verfahren zum Maximieren des Übertragungsbereiches einer bidirektionalen Nachrichtenverbindung (10; 100), die eine optische Faser (16; 160) mit einem ersten Ende und einem zweiten Ende aufweist,
dadurch gekennzeichnet, daß die Dämpfung von optischer Energie, die durch die optische Faser (16; 160) bei Wellenlängen innerhalb eines Übertragungsfensters hindurchgeht, merklich minimiert ist, und
gekennzeichnet durch die Schritte:
a) Einspeisen eines ersten optischen Trägers von einer ersten Wellenlänge (W2; W) in die optische Faser (16; 160) an deren erstem Ende;
b) Einprägen eines ersten Modulationssignales, das sich über einem ersten Frequenzspektrum erstreckt, auf den ersten Träger;
c) Einspeisen eines zweiten optischen Trägers von einer zweiten Wellenlänge (W1; W) innerhalb des Übertragungsfensters in die Faser (16; 160) an deren zweitem Ende;
d) Einprägen eines zweiten Modulationssignales auf den zweiten Träger, wobei das zweite Modulationssignal sich über einem zweiten Frequenzspektrum erstreckt, das vorzugsweise größer ist als das erste Spektrum;
e) Ankoppeln eines ersten Empfängers (54, 420) von einer ersten Bandbreite, die das erste Frequenzspektrum enthält, an das zweite Ende der Faser (16; 160), wobei der erste Empfänger (54; 420) angeordnet ist, um das erste Modulationssignal aus dem ersten optischen Träger herauszuziehen; und
f) Ankoppeln eines zweiten Empfängers (56; 440) mit einer zweiten Bandbreite, die das zweite Frequenzspektrum enthält, an das erste Ende der Faser (16), wobei der zweite Empfänger (56, 440) angeordnet ist, um das zweite Modulationssignal aus dem zweiten optischen Träger herauszuziehen.

13. Verfahren nach Anspruch 12, dadurch gekennzeichnet, daß:
- die erste Wellenlänge (W) äquivalent zu der zweiten Wellenlänge (W) ist, und
- das zweite Frequenzspektrum das erste Frequenzspektrum nicht überlappt.

14. Verfahren nach Anspruch 12 oder 13, dadurch gekennzeichnet, daß sich das Übertragungsfenster von ungefähr 1500 bis 1570 nm erstreckt.

## Revendications

1. Une liaison de communication bidirectionnelle à longue distance comprenant une fibre optique (16 ; 160) ayant une première extrémité et une seconde extrémité, caractérisée par :
- le fait que l'atténuation de l'énergie optique qui traverse la fibre optique (16 ; 160) à des longueurs d'onde (W1, W2 ; W) incluses à l'intérieur d'une fenêtre de transmission est sensiblement minimisée ;
- des premiers moyens (37 ; 270) pour lancer dans la fibre (16 ; 160), à une première extrémité de celle-ci, une première porteuse optique d'une première longueur d'onde (W2 ; W), ces premiers moyens de lancement (37 ; 270) comprenant des moyens (44, 46, 50 ; 340, 350, 360, 400) pour appliquer sur la première porteuse un premier signal modulant qui couvre un premier spectre de fréquence ;
- des seconds moyens (36 ; 260) pour lancer dans la fibre (16 ; 160), à une seconde extrémité de celle-ci, une seconde porteuse optique d'une seconde longueur d'onde (W1 ; W) incluse dans la fenêtre de transmission, ces seconds moyens de lancement (36 ; 260) comprenant des moyens (38, 40, 43 ; 280, 285, 300, 330) pour appliquer sur la seconde porteuse un second signal modulant couvrant un second spectre de fréquence qui est de préférence plus étendu que le premier spectre ;
- un premier récepteur (54 ; 420) d'une première largeur de bande englobant le premier spectre de fréquence, couplé à la seconde extrémité de la fibre (16 ; 160), pour extraire le premier signal modulant à partir de la première porteuse optique ; et
- un second récepteur (56, 440) ayant une seconde largeur de bande qui englobe le second spectre de fréquence, couplé à la première extrémité de la fibre (16 ; 160), pour extraire le second signal modulant à partir de la seconde porteuse optique.

2. La liaison de communication bidirectionnelle de la revendication 1, caractérisée en ce que :
- les premiers moyens (37) comprennent
-- des premiers moyens émetteurs (48) pour générer la première porteuse optique de la première longueur d'onde (W2), et
-- des premiers moyens modulateurs (44, 46, 50) pour moduler la première porteuse optique avec le premier signal modulant couvrant le premier spectre de fréquence ;
- les seconds moyens (36) comprennent
-- des seconds moyens émetteurs (42) pour générer la seconde porteuse optique à la seconde longueur d'onde (W1) incluse dans la fenêtre de transmission, et
-- des seconds moyens modulateurs (38, 40, 43) pour moduler la seconde porteuse optique avec le second signal modulant couvrant un second spectre de fréquence qui est plus étendu que le premier spectre de fréquence ;
- la seconde largeur de bande du second récepteur (56) est plus grande que la première largeur de bande ;
- des premiers moyens de multiplexage (26) sont incorporés pour relier les premiers moyens émetteurs (48) et les seconds moyens récepteurs (56) à la première extrémité de la fibre optique (16) ; et
- des seconds moyens de multiplexage (22) sont incorporés pour relier les seconds moyens émetteurs (42) et les premiers moyens récepteurs (54) à la seconde extrémité de la fibre optique (16).

3. La liaison de communication bidirectionnelle de la revendication 1, caractérisée en ce que :
- la première longueur d'onde (W2) est comprise dans la fenêtre de transmission, et
- la seconde longueur d'onde (W1) n'est pas équivalente à la première longueur d'onde (W2).

4. La liaison de communication bidirectionnelle de la revendication 1, caractérisée en ce que :
- les premiers moyens (37) comprennent
-- des premiers moyens émetteurs (48) pour générer la première porteuse optique d'une première longueur d'onde (W2) à l'intérieur de la fenêtre de transmission, et
-- des premiers moyens modulateurs (44, 46, 50) pour moduler la première porteuse optique avec le premier signal modulant couvrant le premier spectre de fréquence ;
-- les seconds moyens (36) comprennent
-- des seconds moyens émetteurs (42) pour générer la seconde porteuse optique à une seconde longueur d'onde (W1), qui n'est pas équivalente à la première longueur d'onde (W2), à l'intérieur de la fenêtre de transmission, et
-- des seconds moyens modulateurs (38, 40, 43) pour moduler la seconde porteuse optique avec un second signal modulant couvrant un second spectre de fréquence ;
- la seconde largeur de bande du second récepteur (56) est supérieure à la première largeur de bande ;
- des premiers moyens de multiplexage (26) à niveau d'isolation élevé sont incorporés pour relier les premiers moyens émetteurs (48) et les seconds moyens récepteurs (56) à la première extrémité de la fibre op tique (16) ; et
- des seconds moyens de multiplexage (22) à niveau d'isolation élevé sont incorporés pour relier les seconds moyens émetteurs (42) et les premiers moyens récepteurs (54) à la seconde extrémité de la fibre optique (16).

5. La liaison de communication bidirectionnelle de la revendication 4, caractérisée en ce que les premiers moyens de multiplexage (26) à niveau d'isolation élevé comprennent des premier et second multiplexeurs optiques connectés en série.

6. La liaison de communication bidirectionnelle de la revendication 1, caractérisée en ce que :
- la seconde longueur d'onde (W) est équivalente à la première longueur d'onde (W), et
- le second spectre de fréquence ne chevauche pas le premier spectre.

7. La liaison de communication bidirectionnelle de la revendication 6, caractérisée en ce que :
- les premiers moyens (270) comprennent
-- des premiers moyens émetteurs (380) pour générer la première porteuse optique à la première longueur d'onde (W), et
-- des premiers moyens modulateurs (340, 350, 360, 400) pour moduler la première porteuse optique avec le premier signal modulant limité au premier spectre de fréquence ;
- les seconds moyens (260) comprennent
-- des seconds moyens émetteurs (320) pour générer la seconde porteuse optique à la longueur d'onde précitée (W), et
-- des seconds moyens modulateurs (280, 285, 300, 330) pour moduler la seconde porteuse optique avec le second signal modulant limité à un second spectre de fréquence ;
- des premiers moyens coupleurs optiques (240) sont incorporés pour coupler les premiers moyens émetteurs (380) et les seconds moyens récepteurs (540) à la première extrémité de la fibre optique (160) ; et
- des seconds moyens coupleurs optiques (220) sont incorporés pour coupler les seconds moyens émetteurs (320) et les premiers moyens récepteurs (480) à la seconde extrémité de la fibre optique (160).

8. La liaison de communication bidirectionnelle de la revendication 7, caractérisée par des premier et second filtres passe-bande (350, 470) respectivement connectés aux premier et second récepteurs (480, 540).

9. La liaison de communication bidirectionnelle de la revendication 7 ou 8, caractérisée en ce que la fibre optique (160) comprend des premier et second segments couplés de façon optique par un amplificateur optique (600) ayant une bande passante qui contient la première longueur d'onde (W).

10. La liaison de communication bidirectionnelle de la revendication 1 ou de la revendication 6, utilisée dans un système comprenant un missile (12 ; 120), une station de commande (14 ; 140) et la fibre optique (16 ; 160) entre eux, caractériséeence que :
- une structure de bobine (19 ; 185) est incorporée pour coupler une première extrémité de la fibre optique (16 ; 160) à la station de commande (14 ; 140) ;
- les premiers moyens (37 ; 270) sont inclus dans la station de commande (14 ; 140) ;
- les seconds moyens (36 ; 260) sont inclus dans le missile (12 ; 120) ;
- le premier récepteur (54 ; 420) est inclus dans le missile (12 ; 120) et il est couplé à la seconde extrémité de la fibre (16 ; 160) ; et
- le second récepteur (56 ; 440) est inclus dans la station de commande (14 ; 140).

11. La liaison de communication bidirectionnelle de l'une quelconque des revendications 1 à 10, caractérisée en ce que la fenêtre de transmission s'étend d'environ 1500 nm à 1570 nm.

12. Un procédé pour maximiser la distance de transmission d'une liaison de communication bidirectionnelle (10 ; 100) qui comprend une fibre optique (16 ; 160) ayant une première extrémité et une seconde extrémité,
caractérisé en ce que l'atténuation de l'énergie optique qui traverse la fibre optique (16 ; 160) à des longueurs d'onde incluses dans une fenêtre de transmission est sensiblement minimisée, et
caractérisé par les étapes suivantes :
a) on lance une première porteuse optique d'une première longueur d'onde (W2 ; W) dans la première fibre optique (16 ; 160), à sa première extrémité ;
b) on applique à la première porteuse un premier signal modulant couvrant un premier spectre de fréquence ;
c) on lance dans la fibre optique (16 ; 160), à sa seconde extrémité, une seconde porteuse optique d'une seconde longueur d'onde (W1 ; W) qui est contenue dans la fenêtre de transmission ;
d) on applique à la seconde porteuse un second signal modulant couvrant un second spectre de fréquence qui est de préférence plus étendu que le premier spectre ;
e) on couple un premier récepteur (54, 420) d'une première largeur de bande, englobant le premier spectre de fréquence, à la seconde extrémité de la fibre (16 ; 160), ce premier récepteur (54 ; 420) étant disposé de façon à extraire le premier signal modulant à partir de la première porteuse optique ; et
f) on couple un second récepteur (56 ; 440) ayant une seconde largeur de bande qui englobe le second spectre de fréquence, à la première extrémité de la fibre (16), ce second récepteur (56, 440) étant disposé de façon à extraire le second signal modulant à partir de la seconde porteuse optique.

13. Le procédé de la revendication 12, caractérisé en ce que :
- la première longueur d'onde (W) est équivalente à la seconde longueur d'onde (W), et
- le second spectre de fréquence ne chevauche pas le premier spectre de fréquence.

14. Le procédé de la revendication 12 ou 13, caractérisé en ce que la fenêtre de transmission s'étend d'environ 1500 à 1570 nm.
